# EUROPÄISCHE PATENTSCHRIFT

(11) **EP 1 904 903 B1**
(45) Veröffentlichungstag und Bekanntmachung des Hinweises auf die Patenterteilung: **11.04.2012**
(21) Anmeldenummer: 06777617.9
(22) Anmeldetag: 06.07.2006
(51) Int. Cl.: G05B 19/042

(54) **VERFAHREN ZUM BEDIENEN UND BEOBACHTEN EINES STEUERGERÄTS, HIERMIT KORRESPONDIERENDES BEDIEN-/BEOBACHTUNGSGERÄT, STEUERGERÄT SOWIE MASCHINE MIT EINEM SOLCHEN STEUERGERÄT UND VERWENDUNGEN DES VERFAHRENS SOWIE DATENSPEICHERMEDIEN**
METHOD FOR OPERATING AND MONITORING A CONTROL DEVICE, CORRESPONDING OPERATING/MONITORING DEVICE, CONTROL DEVICE, AND MACHINE COMPRISING SUCH A CONTROL DEVICE, AND USES OF SAID METHOD, AS WELL AS STORAGE MEDIA
PROCEDE POUR COMMANDER ET SURVEILLER UN CONTROLEUR, ORGANE DE COMMANDE/SURVEILLANCE CORRESPONDANT, CONTROLEUR, MACHINE EQUIPEE D'UN TEL CONTROLEUR ET UTILISATIONS DU PROCEDE AINSI QUE SUPPORTS D'ENREGISTREMENT DE DONNEES

(30) Priorität: 21.07.2005 DE 102005034168
(43) Veröffentlichungstag der Anmeldung: 02.04.2008
(73) Patentinhaber: SIEMENS AKTIENGESELLSCHAFT, 80333 München (DE)
(72) Erfinder: FREY, Bernhard, 81541 München (DE)
(86) Internationale Anmeldenummer: PCT/EP2006/063971
(87) Internationale Veröffentlichungsnummer: WO 2007/009890

(56) Entgegenhaltungen:
- EP-A- 0 973 297
- WO-A-00/39645
- DE-A1- 10 151 117
- DE-A1- 19 929 933
- US-B1- 6 854 026

## Beschreibung

Die vorliegende Erfindung betrifft ein Verfahren zum Bedienen und Beobachten eines Steuergeräts mittels eines damit datentechnisch verbundenen Bedien-/Beobachtungsgeräts. Das Bedien-/Beobachtungsgerät und das Steuergerät weisen eine prozessorgestützte Steuereinheit zum Ausführen von Softwareprogrammen auf. Die vorliegende Erfindung betrifft weiter ein Bedien-/Beobachtungsgerät mit einer grafischen Bedienoberfläche, Eingabemitteln für einen Benutzer, einer Datenschnittstelle zur datentechnischen Verbindung mit einem Steuergerät sowie mit einer prozessorgestützten Steuereinheit zum Ausführen von Softwareprogrammen. Die Erfindung betrifft zudem ein Steuergerät mit einer prozessorgestützten Steuereinheit zum Ausführen von Softwareprogrammen und mit einer Datenschnittstelle zur datentechnischen Verbindung mit einem Bedien-/Beobachtungsgerät. Außerdem betrifft die Erfindung eine Maschine mit einem solchen Steuergerät. Die Erfindung betrifft zudem geeignete Verwendungen des Verfahrens zum Bedienen und Beobachten von Automatisierungs- und Fertigungsprozessen sowie zur Inbetriebnahme eines Steuergeräts. Schließlich betrifft die Erfindung je ein Datenspeichermedium zur Speicherung eines Anzeige- oder Interpreter-Programms zur Durchführung des erfindungsgemäßen Verfahrens.

Derartige Verfahren sind z.B. aus der Automatisierungs- und Fertigungstechnik bekannt. Dort werden Maschinen, Anlagen oder Anlagenteile mit einem daran angeschlossenen oder im Bedarfsfall anschließbaren Bedien-/Beobachtungsgerät überwacht.

Häufig wird für ein Bedien-/Beobachtungsgerät auch der Begriff HMI-Gerät für Human-Machine-Interface verwendet. Unter dem Begriff Bedien-/Beobachtungsgerät ist ein Gerät zu verstehen, welches Beobachtungsvorgänge visualisieren und ggf. auch Bedienvorgänge mittels Zugriffe auf ein angeschlossenes Steuergerät durchführen kann. Ein Beispiel für ein solches Bedien-/Beobachtungsgerät ist ein sogenanntes Operator Panel, welches über eine vergleichsweise große Anzeigeeinheit für eine grafische Bedienoberfläche verfügt. Auf dieser Bedienoberfläche können Parameter, Graphen oder ein schematisches Abbild der zu überwachenden Maschine oder Anlage dargestellt werden. Durch die geringe Bautiefe können die Operator Panels auch als tragbare Einheit ausgeführt werden. Sie können alternativ auch in einer Schaltschrankwand einer Anlagen- oder Maschinensteuerung angebracht sein. Derartige Bedien-/Beobachtungsgeräte basieren z.B. auf einer Windows CE- oder Linux-Computerplattform.

Eine zu überwachende Maschine, wie z.B. eine Werkzeugmaschine oder ein Antrieb, weist zumeist ein Steuergerät auf, welches den Leistungsteil der Maschine, der Anlage oder des Anlagenteils steuert, regelt und überwacht und welches für den "rauen" Betrieb in der Automatisierungs- und Fertigungstechnik ertüchtigt ist. Über das Steuergerät lassen sich auch Änderungen an den Parametern für die Steuerung und Regelung der Maschine, der Anlage oder des Anlagenteils vornehmen. Die Steuergeräte selbst verfügen gewöhnlich nur über eine eingeschränkte Möglichkeit, den Zustand der angeschlossenen Maschine zu visualisieren. Zumeist sind an der Außenseite eines solchen Steuergeräts Leuchtdioden (LED) angebracht, um z.B. den ordnungsgemäßen Betrieb der Maschine (grüne LED) anzuzeigen. Eine rotleuchtende oder blinkende LED signalisiert üblicherweise einen nichtordnungsgemäßen Betrieb, wie z.B. den Ausfall der Maschine. Bekannt ist auch, dass Steuergeräte über eine Diagnoseschnittstelle, wie z.B. über eine serielle Schnittstelle auf Basis des V24- oder USB-Standards, verfügen können. Über diese Schnittstelle kann z.B. ein Diagnosegerät oder auch das obengenannte Bedien-/Beobachtungsgerät angeschlossen werden.

Die obengenannten Steuergeräte weisen eine Steuereinheit auf, die zumeist als sogenanntes "Embedded System" ausgeführt sind. Bei einem Embedded System handelt es sich um eingebettete Computersysteme, die ihren Dienst in einer Vielzahl von weiteren Anwendungsbereichen versehen, wie z.B. in Flugzeugen, Autos oder Haushaltsgeräten. "Embedded Systems" vereinigen daher durch ihre oftmals sehr hardwarenahe und vergleichsweise einfache Konstruktion die große Flexibilität von Software mit der Leistungsfähigkeit der Hardware. Die Software-Entwicklung für diese Systeme ist daher nicht vergleichbar mit der für z.B. Desktop- oder PC-Systeme. Bevorzugte Programmiersprachen sind z.B. Assembler oder C. Oftmals werden daher Betriebssysteme eingesetzt, die einen auf das nötigste beschränkten Funktionsumfang aufweisen. Solche Betriebssysteme verfügen zwar nicht über Speicherschutz, genügen dafür jedoch Echtzeitanforderungen. Übliche Embedded-Betriebssysteme sind z.B. PERL, VxWorks und zunehmend auch spezielle Linux-Derivate.

Embedded-Systeme basieren zumeist auf derselben Hardware wie Computer, sie unterliegen jedoch meist stark einschränkenden Randbedingungen. So werden z.B. Mikrocontroller eingesetzt, die im Vergleich zu aus dem Desktop- oder Notebook-Bereich bekannten CPUs eine stark eingeschränkte Architektur und Leistungsfähigkeit aufweisen. Weitere Computerkomponenten wie Festplatte, Tastatur, Bildschirm fehlen zumeist ganz. Je nach Erfordernis kann zur Eingabe ein kleines Tastenfeld und zur Ausgabe eine kleine LCD-Anzeige vorgesehen sein. Ein kleiner Flash-ROM- oder Flash-RAM-Chip als elektronischer Speicher ersetzt mechanische Komponenten wie eine Festplatte.

Die Softwareprogramme auf einem Embedded System, wie z.B. das "abgespeckte" Betriebssystem sowie die eigentliche Steuerungsapplikation, werden auch als Firmware bezeichnet. Die Firmware befindet sich gewöhnlich auf einem ROM und kann folglich während des Betriebs nicht verändert werden. Im Falle eines Flash-ROMs besteht die Möglichkeit eines Firmware-Updates, ohne dass der Chip ausgewechselt werden muss. Auf diese Weise kann die "Software" z.B. über die externe Datenschnittstelle aktualisiert werden.

Bedien-/Beobachtungsgeräte weisen bisher eine Parameterschnittstelle auf, so dass ein direkter Zugriff auf das Embedded System erfolgen kann, um interne Betriebsdaten der Firmware, wie z.B. die Steuerlogik, Systemparameter oder interne Betriebszustände, "abfragen" zu können. Heute verfügbare Steuereinheiten können äußerst komplexe Steuerungs- und Regelungsaufgaben in der Automatisierungs- und Fertigungstechnik übernehmen.

Nachteil daran ist zwangläufig die äußerst komplexe und aufwändige Abbildung der Steuerlogik bzw. der Struktur der Steuerungs- und Regelungsmechanismen auf dem Bedien-/Beobachtungsgerät. Diese "Spiegelung" der Logik schafft zudem eine starke Abhängigkeit zwischen den Steuergeräten und den Bedien-/Beobachtungsgeräten in Hinblick auf die Variantenvielfalt und auf die technische Weiterentwicklung solcher Geräte.

Ein weiterer Nachteil ist es, wenn z.B. den Kunden oder dem Servicepersonal einer Maschine, Anlage oder eines Anlagenteils Zugriff auf die Firmware der Steuereinheit eines Steuergeräts gewährt werden muss, um kundenspezifische Anpassungen durchführen zu können. In diesem Fall kann es bei einer Eingabe von falschen Parametern zu Fehlern und ggf. zu Schäden am Steuergerät oder an der mit dem Steuergerät verbundenen Maschine kommen.

Ein Großteil der Entwicklungszeiten sowie Entwicklungskosten finden ihren Niederschlag als maschinenspezifische Applikation wieder, die als Firmware in der Steuereinheit abgelegt ist. Eine derartige Applikation stellt zugleich das "Kondensat", d.h. das Know-how, der Entwicklung dar.

Es ist somit ein großer Nachteil, wenn Dritte auf solche Applikationen in der Firmware einer Steuereinheit zugreifen können bzw. zugreifen dürfen.

Aus der US 6 854 026 B1 ist beispielsweise ein System bekannt, welches über ein lokales Kommunikationsnetzwerk eines PC's mit einem lokalen Web-Browser und Kommunikationsanwendungen mit einem lokalen Gerät verbindet. Das lokale Gerät ist beispielsweise eine SPS oder ein I/O-Modul. An die SPS kann ein weiteres Gerät angeschlossen sein. Der PC kann einerseits ans Internet angeschlossen sein. Auf dem PC kann sich ein Web-Browser befinden, welcher durch eine Applikation gestartet werden kann. Über das Kommunikationsnetzwerk können dabei web browser applets oder active x-objekte übertragen werden.

Es ist somit eine Aufgabe der Erfindung, ein Verfahren sowie ein korrespondierendes Bedien-/Beobachtungsgerät und Steuergerät sowie eine Maschine mit einem solchen Steuergerät anzugeben, durch welche der Aufwand für die Entwicklung und Wartung eines Bedien-/Beobachtungsgerät sowie eines Steuergeräts verringert wird.

Es ist eine weitere Aufgabe Erfindung, den Aufwand zur Anpassung eines Bedien-/Beobachtungsgerät an ein anzuschließendes Steuergerät zu vermindern.

Eine weitere Aufgabe der Erfindung ist es, einen Zugriff auf die Firmware eines Steuergeräts zu unterbinden, wobei ein Bedienen und Beobachten des Steuergeräts weiterhin möglich sein soll.

Die Aufgabe wird für das Verfahren in kennzeichnender Weise dadurch gelöst, dass auf dem Steuergerät ein Interpreter-Programm ausgeführt wird, welches auf Skripte mit Anzeigebausteinen und Programmstrukturen zugreifen kann. Die Programmstrukturen können dabei auf Betriebsdaten der Firmware des Steuergeräts zugreifen können, wobei die Betriebsdaten in Anzeigedaten eines vorgebbaren Anzeigeformats umgewandelt werden und umgekehrt. Die Skripte werden abgearbeitet, wobei die Programmstrukturen das zugehörige Ergebnis in Form von Anzeigebausteinen mit ggf. den Anzeigedaten im vorgegebenen Anzeigeformat zusammenstellen und das Ergebnis dem Bedien-/Beobachtungsgerät zur Verfügung stellen. Auf dem Bedien-/Beobachtungsgerät wird ein Anzeigeprogramm ausgeführt, um zumindest Anzeigebausteine im vorgebbaren Anzeigeformat darzustellen. In den Anzeigebausteinen sind Verweise auf zumindest ein Skript auf dem Steuergerät hinterlegt. Die Verweise stehen dabei in Zusammenhang mit einem Ereignis, wobei dann das zugehörige Skript bei Eintritt des Ereignisses vom Interpreter-Programm gestartet und abgearbeitet wird.

Besonderes Merkmal der Erfindung ist, dass vom Bedien-/Beobachtungsgerät dargestellte Anzeigebausteine bei entsprechenden Ereignissen wiederum Skripte im Steuergerät starten. Diese Skripte stellen als Ergebnis der Abarbeitung ihrerseits neue Anzeigebausteine zusammen, die dann wiederum vom Bedien-/Beobachtungsgerät geladen werden können. Es werden sozusagen - vom Bedien-/Beobachtungsgerät aus betrachtet - Skripte gestartet und im Anschluss das zugehörige Ergebnis der Skriptabarbeitung zur Darstellung geladen.

Der große Vorteil der Erfindung liegt darin, dass das Bedien-/Beobachtungsgerät nicht mehr direkt auf die sensitive Firmware der Steuereinheit zugreifen kann. Die Kommunikation erfolgt nun über ein Interpreter-Programm. Ein Zugang zur eigentlichen Steuerungsapplikation sowie zu den internen Betriebsdaten der Firmware ist nicht mehr möglich. Die Programmstrukturen der Skripte sind dabei so strukturiert, dass sie einen Schreib- und Lesezugriff auf die Steuerlogik des Steuergeräts erlauben. Vorteilhaft ist es dabei möglich, unzulässige Parameterwerte zu prüfen, wie z.B. auf Plausibilität. Dadurch werden unzulässige Zustände und folglich mögliche Schäden am Steuergerät sowie an der angeschlossenen Maschine vermieden.

Das Interpreter-Programm, welches von der Steuereinheit ausgeführt wird, arbeitet schrittweise Skripte ab. Skripte bestehen aus einer Liste von Befehlen, die nacheinander abgearbeitet werden. Für diese "Skriptsprache" ist eine einfache Programmsyntax definiert, welche auch bedingte Anweisungen wie Verzweigungen, Schleifen sowie Funktionsaufrufe umfassen. Auch kann der vorhandene Befehlsvorrat dynamisch erweitert werden, indem neue Programmstrukturen z.B. in eine Befehlsbibliothek aufgenommen werden. Die Verwendung von Skripten ist z.B. von den Programmiersprachen Visual Basic oder JAVA-Script bekannt. Die Skripte sind dabei in Klartext abgefasst und in entsprechender Weise einfach zu lesen und zu ändern. Weitere bekannte Beispiele für Skripte sind sogenannten Makros.

Damit ist ein weiterer großer Vorteil verbunden. Denn die Skriptsprache, d.h. die Hintereinanderreihung der einfachen strukturierten Skriptbefehle, erlaubt eine "Programmierung" auf einem hohen Abstraktionsniveau, ohne dass Kenntnisse der eigentlichen Firmware notwendig sind. Dadurch können Kunden wie auch OEM-Lieferanten eigene Anwendungen für ihre Zwecke erstellen. Einfache Skriptbefehle können z.B. sein: "SETPARAM" oder "GETPARAM" mit einer nachfolgend festgelegten Anzahl von erforderlichen zu übergebenden bzw. zu übernehmenden Argumenten.

Die zuvor beschriebenen Skripte können auch die Ablaufsteuerung von "Wizards" übernehmen. Wizard sind interaktive Hilfsprogramme, wie z.B. Installationsprogramme.

Da das Interpreter-Programm die Befehle sequentiell abarbeitet, indem zu dem jeweiligen Befehl ein lauffähiger Code, wie z.B. in einer Runtime-Bibliothek, ausgeführt wird, ist eine Kompilierung vorteilhaft bei Änderungen der Skripte, der Anzeigebausteine und der Programmstrukturen nicht erforderlich. Die Zugriffe auf die komplexe Steuerlogik des Steuergeräts mit ihren gerätespezifischen Besonderheiten erfolgt alleinig durch das Interpreter-Programm.

Das Interpreterprogramm kann darüber hinaus auch anderweitige Aufgaben im Steuergerät ausführen, die nicht dem Bedien-/Beobachtungsgerätsgerät zuzuordnen sind. Das Interpreter-Programm kann z.B. in der Skriptsprache abgefasste Applikationen für die Firmware ausführen.

Ein weiterer großer Vorteil ist, dass kundenspezifische Anpassungen, wie z.B. in Form einer geänderten Darstellung von Parametern, keinerlei Änderungen an der Firmware des Bedien-/Beobachtungsgeräts sowie der Firmware der Steuereinheit be-dingen. Die Änderungen erfolgen ausschließlich dadurch, indem neue Dateien mit Skripten und ggf. mit Anzeigebausteinen und Programmstrukturen in das Steuergerät geladen werden.

Die Betriebsdaten der Firmware, welche üblicherweise in einem binären Format vorliegen, werden mittels der Programmstrukturen in Anzeigedaten eines vorgebbaren Anzeigeformats umgewandelt. Ein mögliches Anzeigeformat ist z.B. ein sogenannter ASCII-String, welcher ein binäres Betriebsdatum in eine im Klartext lesbare Zeichenkette umwandelt. Eine solche Zeichenkette kann zur Kennzeichnung für das Anzeigeprogramm auch zwischen zwei sogenannten "Tags" eingeschlossen werden. Tags werden z.B. in der Auszeichnungssprache XML oder in der Beschreibungssprache HTML eingesetzt.

Die Verweise stehen, wie zuvor beschrieben, in Zusammenhang mit einem auslösenden Ereignis. Ein Ereignis kann z.B. eine Benutzeraktion auf einer grafischen Bedienoberfläche des Bedien-/Beobachtungsgeräts sein. Ein Beispiel für eine Benutzeraktion ist die Auswahl einer von mehreren Optionen in einer sogenannten Combobox. Die Auswahl kann z.B. mittels eines Mauszeigers erfolgen, indem die gewünschte Option angeklickt wird. Davon abhängig wird ein Verweis auf ein zugehöriges Skript auf dem Steuergerät ausgegeben. Auch ist ein Verweis auf dasselbe Skript auf dem Steuergerät möglich, indem z.B. mit dem Verweis ein zugehöriger Text oder eine zugehörige Kennung der ausgewählten Option als Argument ausgegeben wird.

Ein Ereignis kann z.B. auch ein interner Melde- oder Alarmzustand des Steuergeräts sein. Derartige Meldungen werden z.B. im Rahmen eines Interrupts oder einer sogenannten Exception generiert oder zyklisch von einem Überwachungsprogramm des Steuergeräts mittels eines Interrupts ausgegeben. Abhängig von einem auszulösenden Ereignis kann auch ein entsprechender Anzeigebaustein erzeugt und abspeichert werden. Dieser Anzeigebaustein kann z.B. einen Fehler- oder Warntext visualisieren. Auf diese Weise können auch vorteilhaft Meldungen an das Bedien-/Beobachtungsgerät übertragen werden, auch wenn keine Benutzeraktion vorliegt.

Im besonderen Maße umfassen die Anzeigebausteine z.B. Textfelder, Bitmaps, Editierfelder. Dadurch lassen sich für das Bedien-/Beobachtungsgerät neue Bedienoberflächen auf einfache Weise modular erstellen.

Weiterhin umfassen die Programmstrukturen z.B. mathematische und logische Funktionen sowie Programmverzweigungen und Schleifen. Mathematische Funktionen können z.B. Multiplikation, Division, Addition sein. Logische Funktionen können z.B. ODER-, AND-, Schiebeoperationen oder auch bitbezogene Operationen sein. Die Programmstrukturen können sogar in einer Weise strukturiert sein, dass sich Funktionen in rekursiver Weise sich selbst wieder aufrufen. Auf diese Weise ist eine Konstruktion mächtiger und zugleich einfacher Befehle möglich.

Es können gemäß einer weiteren Verfahrensvariante mehrere Anzeigebausteine zu Anzeigeseiten kombiniert werden. Dadurch können in vorteilhafter weise als Abarbeitungsergebnis eines Skripts ganze Bildschirmseiten mit einer Vielzahl von Anzeigebausteinen dargestellt werden, wie z.B. ein Stammmenü oder ein Startfenster.

Vorzugweise verwaltet das Interpreter-Programm Daten in Form von Variablen und Arrays, wobei diese in den Skripten definiert werden können. Dadurch können in vorteilhafter Weise anwendungsbezogene Datentypen deklariert und eingesetzt werden.

Vorzugsweise werden die Skripte, die Anzeigebausteine und die Programmstrukturen als Dateien in einer Bibliothek abgelegt. Der Begriff Bibliothek ist dabei weit auszulegen. Insbesondere ist darunter eine datentechnisch vorteilhafte Organisation der "Quelldateien" der Skripte, Anzeigebausteine sowie der Programmstrukturen zu verstehen, wie z.B. in Verzeichnissen bzw. Ordnern.

Die oben genannten Dateien können auch in einem komprimierten Dateiformat vorliegen und bei Aufruf durch das Interpreter-Programm wieder dekomprimiert werden. Das Entpacken bzw. Dekomprimieren kann mittels eines kleinen Parser-Programms erfolgen. Die Dateikomprimierung erlaubt eine vorteilhafte erhebliche Reduzierung des Speicherbedarfs der sonst in Klartext vorliegenden "Quelldateien". Zudem erhöht sich vorteilhaft die Abarbeitungsgeschwindigkeit des Interpreter-Programms.

Vorzugsweise werden die Anzeigebausteine bzw. die aus Anzeigebausteinen kombinierten Anzeigeseiten in einer Ergebnisdatei gespeichert. Diese Ergebnisdatei kann über Dateitransferbefehle auf einfache Weise vom Bedien-/Beobachtungsgerät geladen werden. Dies kann z.B. über Angabe des Dateinamens und des zugehörigen Pfads erfolgen.

Wie die "Quelldateien" können auch die Anzeigebausteine bzw. die aus Anzeigebausteinen kombinierten Anzeigeseiten in ein komprimiertes Dateiformat in der Ergebnisdatei gespeichert werden. Hierzu führt das Interpreter-Programm ein geeignetes Komprimierungsprogramm aus. Nach dem Laden der komprimierten Datei wird diese durch das Anzeigeprogramm wieder entpackt. Besonders geeignet ist hierfür ein ACX- oder ACF-Dateiformat, welches Text mit geringem Softwareaufwand besonders effektiv komprimiert.

In einer weiteren bevorzugten Ausführungsform prüft das Anzeigeprogramm zyklisch das Vorhandensein von aktualisierten Anzeigebausteinen bzw. von aus Anzeigebausteinen kombinierten aktualisierten Anzeigeseiten. Liegt z.B. die Ergebnisdatei nun mit jüngerem Datum und Uhrzeit gegenüber der zuletzt geladenen Ergebnisdatei vor, so wird die Ergebnisdatei geladen und die enthaltenen Anzeigeobjekte dargestellt.

In einer bevorzugten Ausführungsform des Verfahrens werden die Skripte, die Anzeigebausteine und die Programmstrukturen in der Notation der Auszeichnungssprache XML (Extentable Markup Language) strukturiert. XML ist eine standardisierte Auszeichnungssprache, mittels derer Konzepte und Regeln eigene Auszeichnungssprachen, Programmiersprachen sowie Skriptsprachen definiert werden können. Eine auf Basis dieser Konzepte und Regeln entwickelte Skriptsprache besteht immer wieder aus Elementen, markiert durch sog. Tags, deren Verschachtelungsregeln und aus Attributen mit erlaubten Wertzuweisungen.

Der große Vorteil einer Skriptsprache auf Basis von XML ist die einfache Erweiterbarkeit derer Elemente sowie das Vorhandensein einer Vielzahl von Entwicklungstools wie XML Tools, Editoren und Prüfwerkzeuge wie DTD (document type definition) zur Syntaxprüfung.

Alternativ kann zur Abarbeitung der Skripte die Skriptsprache Tcl (Tool command language) mit Anzeigebausteinen auf Basis von Tk (Tool kit) verwendet werden. Entsprechende Bibliotheken und Werkzeuge sind ebenfalls vorhanden, so dass ein Benutzer in sehr kurzer Zeit in der Lage sein wird, Skripte zu erstellen.

Vorzugsweise wird das Interpreter-Programm durch die Steuereinheit in einem Hintergrund-Prozess ausgeführt. Damit ist der Vorteil verbunden, dass vorrangig Steuer- und Regelaufgaben durch das Steuergerät ausgeführt werden, so dass diese Aufgaben nicht durch Skriptaufrufe beeinträchtigt werden.

Im Besonderen führt die Steuereinheit Softwareprogramme eines Echtzeit- oder auch Realtime-Betriebssystems, wie z.B. PERL, VxWorks oder RTLinux, aus. Dadurch ist die Ausführung von parallel mehreren Überwachungs-, Steuerungs- und Regelungsaufgaben möglich. Ein übergeordnetes Zeitscheiben Management stellt sicher, dass die durchzuführenden Aufgaben gemäß ihrer Priorisierung ausreichend Rechenzeit in einem vorgebbaren Zeitintervall erhalten.

In einer weiteren vorteilhaften Verfahrensvariante erfolgt die Datenübertragung zwischen dem Bedien-/Beobachtungsgerät und dem Steuergerät auf drahtlosem Wege, wie z.B. mittels der standardisierten Übertragungsverfahren WLAN, Bluetooth auf funktechnischer Basis oder mittels IRDA auf Basis von Infrarotstrahlen. Im Vergleich zu den gängigen standardisierten leitungsgebundenen Übertragungsverfahren, wie z.B. mittels LAN, Ethernet oder USB, ist sofort ein Verbindungsaufbau möglich, sobald das Bedien-/Beobachtungsgerät im Erfassungsbereich eines Steuergeräts gelangt. Da sowohl bei der kabellosen als auch bei der kabelgebundenen Datenübertragung sämtliche Anzeigebausteine ausschließlich vom jeweiligen Steuergerät geladen und dargestellt werden, ist weiterhin vorteilhaft das Bedienen und Beobachten mehrerer erreichbarer Steuergeräte möglich. Nach Auswahl eines der erreichbaren Steuergeräte kann z.B. eine Refresh- oder Aktualisierungstaste auf dem Bedien-/Beobachtungsgerät gedrückt werden, so dass die zum aktuell zu überwachenden Steuergerät zugehörige Ergebnisdatei mit den Anzeigebausteinen ausgelesen und dargestellt werden kann.

Das erfindungsgemäße Verfahren ist auch zur Inbetriebnahme eines Steuergeräts verwendbar. Somit kann mittels eines vorteilhaft einzigen Bedien-/Beobachtungsgeräts z.B. eine ganze Anlage mit einer Vielzahl von Steuergeräten in Betrieb genommen werden.

Das erfindungsgemäße Verfahren kann besonders vorteilhaft zum Bedienen und Beobachten von Automatisierungs- und Fertigungsprozessen verwendet werden, da in diesem industriellen Umfeld eine große Anzahl unterschiedlichster Steuergeräte mit unterschiedlichen Steuer- und Regelungsaufgaben zum Einsatz kommt.

Weiterhin kann das Anzeigeprogramm zur Durchführung des erfindungsgemäßen Verfahrens auf einem Bedien-/Beobachtungsgerät in (ausschließlich) maschinenlesbarer Form auf einem Datenspeichermedium gespeichert werden.

Auch kann das Interpreter-Programm und/oder die Bibliothek aus Skripten, Anzeigebausteinen und Programmstrukturen zur Durchführung des erfindungsgemäßen Verfahrens auf einem Steuergerät in maschinenlesbarer Form auf einem Datenspeichermedium gespeichert werden.

Das Datenspeichermedium kann z.B. eine Diskette, eine Compact Disk (CD) oder eine Digital Versatile Disk (DVD) sein. Alternativ kann das Datenspeichermedium auch ein kompakte elektronische Speicherkarte, insbesondere eine MM-Card, SD-Card oder CF-Card, sein.

Das Datenspeichermedium kann vorteilhaft vor Ort mittels eines geeigneten Lesegeräts im Bedien-/Beobachtungsgerät oder im Steuergerät ausgelesen werden. Insbesondere sind elektronische Speicherkarten und die entsprechenden Lesegeräte wegen ihrer äußerst kompakten Bauart vorteilhaft für den Einbau in ein Bedien-/Beobachtungsgerät bzw. in ein Steuergerät geeignet.

Die Aufgabe wird weiterhin mit einem zum Verfahren korrespondierenden Bedien-/Beobachtungsgerät gelöst. Dazu weist das Bedien-/Beobachtungsgerät eine grafische Bedienoberfläche, Eingabemittel für einen Benutzer, eine Datenschnittstelle zur datentechnischen Verbindung des Bedien-/Beobachtungsgeräts mit einem Steuergerät sowie eine prozessorgestützte Steuereinheit zum Ausführen von Softwareprogrammen auf.

Die Steuereinheit dient zum Ausführen eines Anzeigeprogramms zur Durchführung des erfindungsgemäßen Verfahrens. Das Anzeigeprogramm dient insbesondere zum Laden und Darstellen zumindest von Anzeigebausteinen in einem vorgebbaren Anzeigeformat auf der grafischen Bedienoberfläche. Das Anzeigeprogramm dient auch zur Ausgabe eines Verweises auf zumindest ein Skript auf dem Steuergerät. Dabei ist der Verweis in den Anzeigebausteinen hinterlegt und durch eine Benutzeraktion auf der grafischen Bedienoberfläche auswählbar.

In einer besonderen Ausführungsform weist ein erfindungsgemäßes Bedien-/Beobachtungsgerät einen Touch-Screen auf, welcher zugleich Anzeigeeinheit für die grafische Bedienoberfläche, wie z.B. ein LCD-Display, und Eingabemittel ist. Auf der grafischen Bedienoberfläche dargestellte Anzeigebausteine, welche mehrere Möglichkeiten für eine Auswahl einem Benutzer anbieten, erlauben auf vorteilhaft einfache Weise eine Auswahl mit einem Fingerdruck. Weiterhin reduziert sich vorteilhaft die Anzahl von Tasten.

In einer bevorzugten Ausführungsform ist das Bedien-/Beobachtungsgerät als tragbare mobile Einheit ausgeführt. Dieses Gerät kann in vorteilhafter Weise z.B. von einem Servicetechniker oder von einem Inbetriebsetzer für den jeweiligen Einsatz mitgeführt werden.

Besonders vorteilhaft ist die Ausbildung eines Bedien-/Beobachtungsgeräts als Operator Panel für den Einsatz in der Automatisierungs- und Fertigungstechnik. Derartige Geräte sind besonders für das raue industrielle Umfeld ausgebildet.

Die Aufgabe wird weiterhin mit einem zum Verfahren korrespondierenden Steuergerät gelöst. Ein solches Steuergerät weist eine prozessorgestützte Steuereinheit zum Ausführen von Softwareprogrammen und eine Datenschnittstelle zur datentechnischen Verbindung mit einem Bedien-/Beobachtungsgerät auf.

Die Steuereinheit dient zum Ausführen eines Interpreter-Programms zur Durchführung des erfindungsgemäßen Verfahrens. Insbesondere dient das Interpreter-Programm zum Starten und Abarbeiten eines Skripts mittels eines von der Datenschnittstelle empfangenen zugehörigen Verweises auf das Skript im Steuergerät. Ebenso dient das Interpreter Programm zum Zusammenstellen des zugehörigen Abarbeitungsergebnisses mittels der Programmstrukturen des gestarteten Skripts in Form von Anzeigebausteinen. Schließlich dient das Interpreter-Programm zum Speichern der Anzeigebausteine auf dem Steuergerät.

In bevorzugter Weise weist die Steuereinheit eines solchen Steuergeräts einen Mikrocontroller auf. Ein Mikrocontroller umfasst im Gegensatz zu einer CPU eine Vielzahl von digitalen Ein- und Ausgängen sowie gegebenenfalls mehrere analoge Ein-und Ausgänge. Dadurch können vorteilhaft viele Messsignale, Schaltsignale, Drehzahlsignale etc. erfasst werden. Zugleich kann eine Vielzahl von Aktoren über nachgeschaltete Leistungsverstärker angesteuert werden, wie z.B. Motoren, Stellglieder, Ventile. Durch die Integration der Ein-/Ausgabekanäle auf dem Mikrocontroller ist eine äußerst kompakte Bauart möglich.

Zum Teil umfassen Mikrocontroller einen integrierten RAM-Speicher sowie einen ROM-Speicher. Auf diese Weise lässt sich auch in mechanischer Hinsicht eine im ROM-Speicher hinterlegte Firmware vor unbefugten Zugriffen schützen.

Eine derartige Steuereinheit kann auch als ein im Steuergerät eingebettetes System betrachtet werden (embedded system). Weitere notwendige Anpassschaltungen und Treiberbausteine können mit dem Mikrocontroller auf einer Platine äußerst kompakt angeordnet werden und ggf. vor Umwelteinflüssen gekapselt ausgeführt werden.

Besonders vorteilhaft ist die Ausbildung eines Steuergeräts als Automatisierungsgerät. Aufgrund der vielfältigen Steuer-und Regelungsaufgaben im industriellen Umfeld besteht gerade dort der Wunsch nach einfach bedien- und beobachtbaren Geräten.

Schließlich ist eine Maschine oder ein Anlagenteil, welche bzw. welcher ein erfindungsgemäßes Steuergerät zur Steuerung der Maschine oder des Anlagenteils aufweist, vorteilhaft schneller und effektiver zu bedienen und zu beobachten.

Die Erfindung wird an Hand der nachfolgenden Figuren näher erläutert. Dabei zeigt
- FIG 1: einen beispielhaftes Bedien-/Beobachtungsgerät, welches mit einem Steuergerät datentechnisch verbunden ist,
- FIG 2: eine Darstellung der Funktionsblöcke des beispielhaften Bedien-/Beobachtungsgeräts und Steuergeräts und deren Wechselwirkung gemäß dem erfindungsgemäßen Verfahren,
- FIG 3: ein Beispiel für den Aufbau einer Bibliothek mit Anzeigebausteinen, Programmstrukturen und Skripten gemäß der Erfindung,
- FIG 4, 5: beispielhafte Programmstrukturen in der Notation der Auszeichnungssprache XML,
- FIG 6, 7: beispielhafte Skripte in XML,
- FIG 8, 9: beispielhafte Datenstruktur einer Programmstruktur in XML, welche mit der internen Steuerlogik eines Steuergeräts interagiert,
- FIG 10-13: beispielhafte grafisch dargestellte Anzeigebausteine sowie die jeweilige zugehörige Abfolge von Befehlen in XML,
- FIG 14: die prinzipielle Funktionsweise der Komprimierung eines beispielhaften XML-Skripts in eine entsprechende AXF-Datei gemäß der Erfindung,
- FIG 15: ein beispielhaftes Steuergerät mit einem Lesegerät zum Auslesen einer elektronischen Speicherkarte als Datenspeichermedium für ein Interpreter-Programm gemäß der Erfindung,
- FIG 16: einen beispielhaften Ablauf für das Starten, Abarbeiten eines Skripts und eines daraus erzeugten Anzeigebausteins gemäß dem erfindungsgemäßen Verfahren am Beispiel eines Testskripts und
- FIG 17: die zugehörigen Befehlszeilen des beispielhaften Skripts bzw. Anzeigebausteins gemäß FIG 16 in XML.

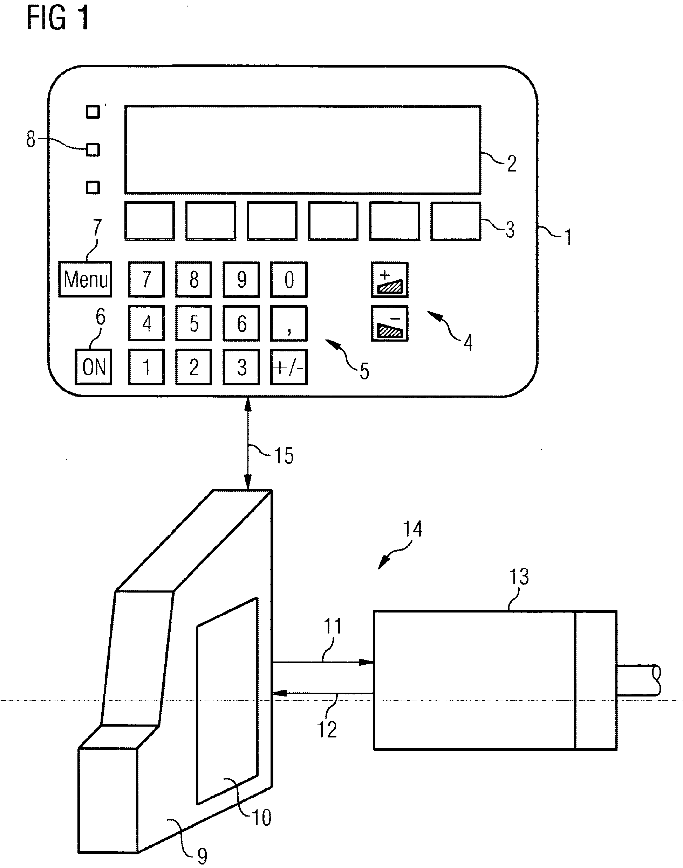

FIG 1 zeigt ein beispielhaftes Bedien-/Beobachtungsgerät 1, welches mit einem Steuergerät 9 datentechnisch verbunden ist. Das Bedien-/Beobachtungsgerät 1 weist eine Anzeigeeinheit bzw, eine grafische Bedienoberfläche 2 für die Darstellung der von dem Steuergerät 9 geladenen Anzeigebausteine auf. Darüber hinaus umfasst das Bedien-/Beobachtungsgerät 1 beispielhaft eine Tastenreihe 3, welche als sogenannte Softkeys Befehle oder Funktionen ausführen, die auf der grafischen Bedienoberfläche 2 darüberliegend symbolisiert oder beschrieben werden. Die Tasten 4 erlauben die Einstellung der Helligkeit der Anzeige. Ein Zahlenblock 5 erlaubt die Eingabe von Zahlenwerten, z.B. ein Ändern von Prozessparametern. Mittels des Schalters 6 kann das Bedien-/Beobachtungsgerät 1 ein- und ausgeschaltet werden. Mittels der mit MENÜ gekennzeichneten Taste ist eine sofortige Rückkehr in ein Stammmenü möglich. Mit dem Bezugszeichen 8 sind Kontrollleuchten gekennzeichnet.

FIG 1 zeigt weiterhin ein beispielhaftes Steuergerät 9, welches gemäß dem Beispiel der Figur mit einem Motor 13 verbunden ist. Der Motor 13 und das Steuergerät 9 bilden gemäß dem Beispiel der Figur eine Maschine 14, wie z.B. eine Werkzeugmaschine. Das Steuergerät 9 kann auch direkt am Motor 13 angeflanscht sein. Das Steuergerät 9 weist eine Steuereinheit 10, vorzugsweise ausgebildet als eingebettetes System, auf. Die Steuereinheit 10 kommuniziert über eine drahtlose oder leitungsgebundene Datenverbindung 15 mit dem Bedien-/Beobachtungsgerät 1. Der beispielhafte Motor 13 ist über Ausgabeleitungen 11 und Eingabeleitungen 12, wie z.B. zur Erfassung der Drehzahl, an das Steuergerät 9 angeschlossen.

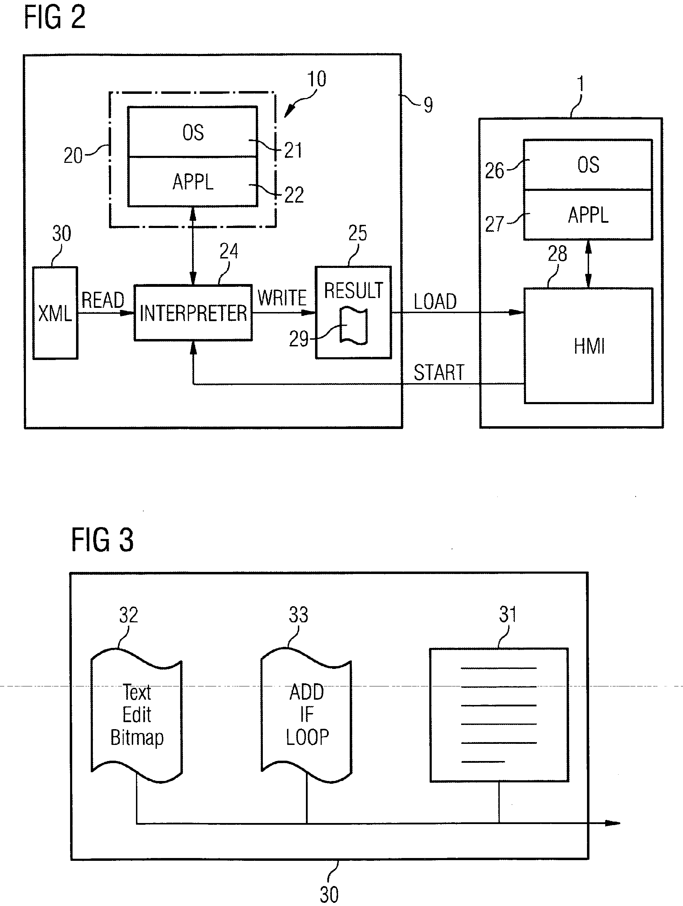

FIG 2 zeigt eine Darstellung der Funktionsblöcke des beispielhaften Bedien-/Beobachtungsgeräts 1 und des Steuergeräts 9 sowie deren Wechselwirkung gemäß dem erfindungsgemäßen Verfahren. Das Bedien-/Beobachtungsgerät 1 verfügt über ein Betriebssystem 26 zum Durchführen der wesentlichen Ein- und Ausgabefunktionen des Bedien-/Beobachtungsgerät 9. Mit dem Bezugszeichen 27 ist eine beispielhafte Applikation APPL bezeichnet, die gesondert oder auch parallel zu einem Anzeige-programm 28 - im Beispiel der Figur mit "HMI" bezeichnet - ausgeführt werden kann. Bei der Applikation 27 kann es sich z.B. um einen Texteditor oder ein Taschenrechnerprogramm handeln.

FIG 2 zeigt weiterhin das beispielhafte Steuergerät 9 mit der Steuereinheit 10, gekennzeichnet durch einen punktstrichlierten Rahmen. Die Steuereinheit 10 umfasst ein Betriebssystem 21 sowie beispielhaft eine Applikation 22. Diese Applikation 22 kann z.B. ein Steuer- und Regelungsprogramm für den an das Steuergerät 9 angeschlossenen beispielhaften Motor 13 gemäß FIG 1 sein. Betriebssystem 21 und Applikation 22 bilden beispielhaft die Firmware der Steuereinheit 10.

Erfindungsgemäß ist ein Interpreter-Programm 24 vorgesehen, welches Skripte, Anzeigebausteine sowie Programmstrukturen in der XML-Notation aus einer Bibliothek 30 auslesen kann. Dies ist durch einen Pfeil mit der Bezeichnung READ gekennzeichnet. Im Rahmen der Abarbeitung erzeugte Anzeigebausteine 29 werden als Ergebnisdatei 25 abgespeichert. Dies ist durch den weiteren Pfeil mit der Bezeichnung WRITE symbolisiert. Ein weiterer Pfeil mit der Bezeichnung START zeigt den Weg an, den eine Anforderung vom Anzeigeprogramm 28 zum Interpreter-Programm 24 nimmt. Über diesen Weg wird eine Kennzeichnung des gewünschten Skripts übertragen, das danach unmittelbar vom Interpreter-Programm abgearbeitet wird. Das Ergebnis dieser Abarbeitung kann durch das Anzeigeprogramm 28 im Anschluss als Ergebnisdatei 25 geladen werden. Dies ist durch den Pfeil mit der Bezeichnung LOAD symbolisiert.

FIG 3 zeigt ein Beispiel für den Aufbau einer Bibliothek 30 mit Skripten 31, Anzeigebausteinen 32 und Programmkonstrukten 33. Dabei können die Skripte 31 wiederum aus Anzeigebausteinen 32 und Programmstrukturen 33 kombiniert sein. Die in der Bibliothek 30 gespeicherten Anzeigebausteine 32 und Programmkonstrukte 33 werden vom Interpreter-Programm im Rahmen der Skriptabarbeitung in einen neuen Anzeigebaustein modular eingebunden. Wie eingangs beschrieben, ist es vorteilhaft, diese als Dateien in Verzeichnissen bzw. Ordner zu organisieren.

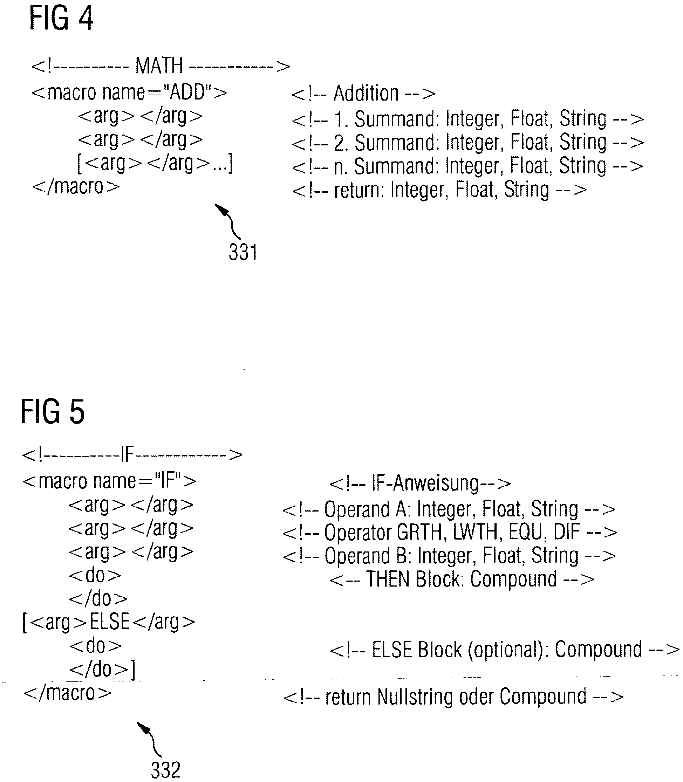

FIG 4, 5 zeigen beispielhafte Programmstrukturen 331, 332 in der Notation der Auszeichnungssprache XML.

FIG 4 zeigt die prinzipielle Syntax einer Programmstruktur 331 mit der Bezeichnung "ADD", welche eine Reihe von Summanden addiert. Die Summanden werden bei Aufruf dieser Programmstruktur 331 in Form von Argumenten übergeben. <arg> bezeichnet dabei den Beginn eines zu übergebenden Arguments. </arg> das entsprechende Ende. Zwischen diesen beiden Klammerausdrücken wird dann der zu übergebende Zahlenwert eingefügt. Nach der Abarbeitung wird das Ergebnis, d.h. die Summe der Summanden, als Ergebnis der aufrufenden Funktion zurückgegeben.

FIG 5 zeigt als Programmstruktur 332 eine allgemein bekannte IF-ELSE-Anweisung, welche aus anderen Programmiersprachen, wie z.B. PASCAL, bekannt ist. Die zugehörige beispielhafte Datenstruktur spezifiziert, dass in der ersten und dritten Zeile mit Argumenten die zu vergleichenden Operanden zu übergeben sind. In der zweiten Zeile ist die Art des Vergleichs mittels eines Operators anzugeben, wie z.B. "größer", "gleich", "kleiner". In den beiden nachfolgenden mit <do>-Argumenten bezeichneten Zeilen erfolgt die Befehlsabarbeitung für den Fall, dass das Vergleichsergebnis positiv ist. Im anderen Fall erfolgt die alternative Bearbeitung nach dem mit "ELSE" bezeichneten Schlüsselwort.

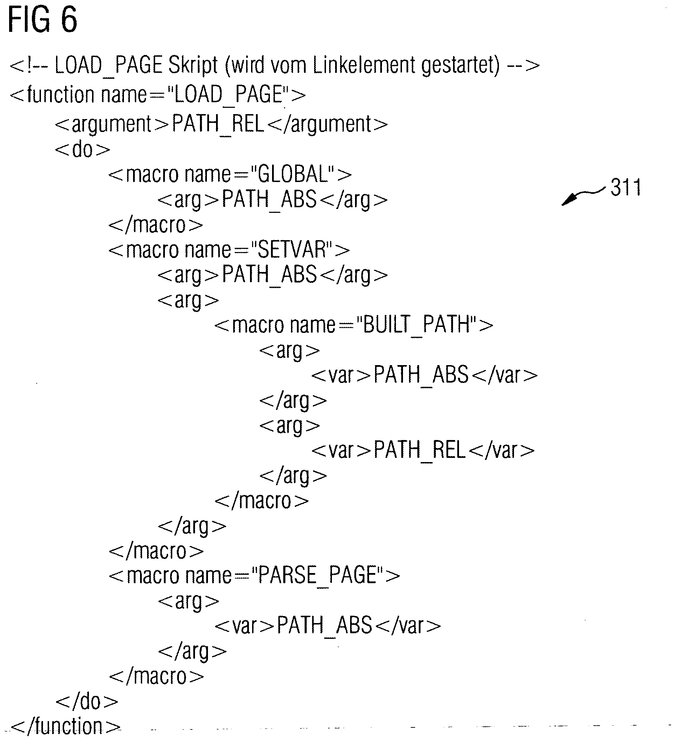

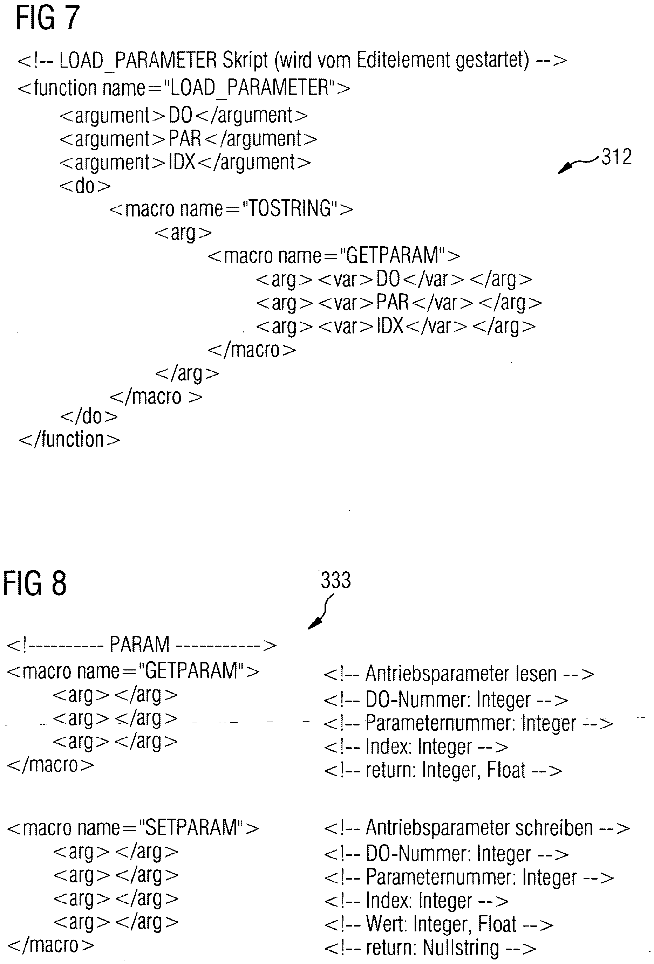

FIG 6, 7 zeigen beispielhafte Skripte 311, 312 in XML.

Das Skript gemäß FIG 6 mit dem Titel LOAD_PAGE wird als Reaktion auf eine Benutzeraktion durch das Anzeigeprogramm auf dem Bedien-/Beobachtungsgerät 1 spezifiziert und gestartet. Die beispielhafte Datenstruktur ermittelt aus einer relativen Pfadangabe eine absolute Pfadangabe, so dass die gewünschte Datei adressiert werden kann. Mittels des Befehls PARSE_PAGE wird die Datei, welche wiederum Skripte 31, Anzeigebausteine 32 oder Programmstrukturen 33 aufweisen kann, geladen und diese dann abgearbeitet.

FIG 7 zeigt eine Programmstruktur 312 mit dem Titel "LOAD_PARAMETER". Gemäß XML-Notation wird zuerst die innerste Programmstruktur abgearbeitet, d.h. der Befehl "GETPARAM". Der ermittelte Parameterwert wird anschließend in einen String, d.h. in eine Zeichenkette, umgewandelt und anschließend als Anzeigebaustein in der Ergebnisdatei abgelegt.

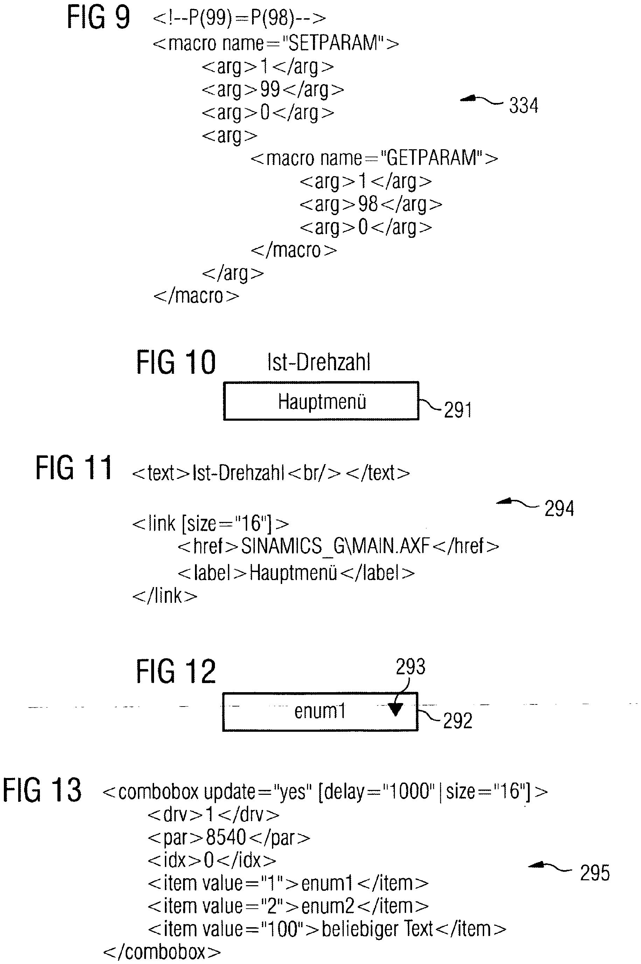

FIG 8, 9 zeigen beispielhaft die Datenstruktur 333 einer Programmstruktur 334 in XML, welche mit der internen Steuerlogik eines Steuergeräts interagiert.

FIG 8 zeigt die Datenstruktur einer GETPARAM- und einer SETPARAM-Anweisung. In der jeweiligen Datenstruktur ist die Anzahl der zu übergebenden oder zu lesenden Argumenten angegeben.

FIG 9 zeigt eine auf diese basierende Programmstruktur, welche - wiederum ausgehend von der innersten Programmstruktur - den Wert des Parameters 98 ausliest und diesen Wert in den Parameter 99 einschreibt. Es handelt sich hierbei um eine einfache Kopieranweisung.

FIG 10-13 zeigen beispielhafte grafisch dargestellte Anzeigebausteine 291-292 sowie die jeweilige zugehörige Abfolge von Befehlen 294-295 in XML. FIG 10 zeigt ein Textfeld mit dem Titel "Hauptmenü". Die Größe dieses beispielhaften Textfelds wird mit dem Parameter size="16" gemäß FIG 11 festgelegt. Wird dieses Textfeld z.B. mit einem Mauszeiger angewählt, so wird das Interpreter-Programm 24 durch das Anzeigeprogramm 28 veranlasst, die beispielhafte Datei "SINAMICS_G\MAIN.AXF" zu laden, deren Anzeigebausteine eine Hauptmenü-Bildschirmseite darstellen kann. FIG 12 zeigt eine sog. Combobox mit dem gegenwärtigen Titel "enuml". Mittels Anwahl des eingezeichneten Pfeils 293 kann dann eine Auswahl aus mehreren Feldern getroffen werden. Die mögliche Auswahl ist beispielhaft gemäß FIG 13 in den Befehlszeilen mit dem Schlüsselwort "item" angegeben.

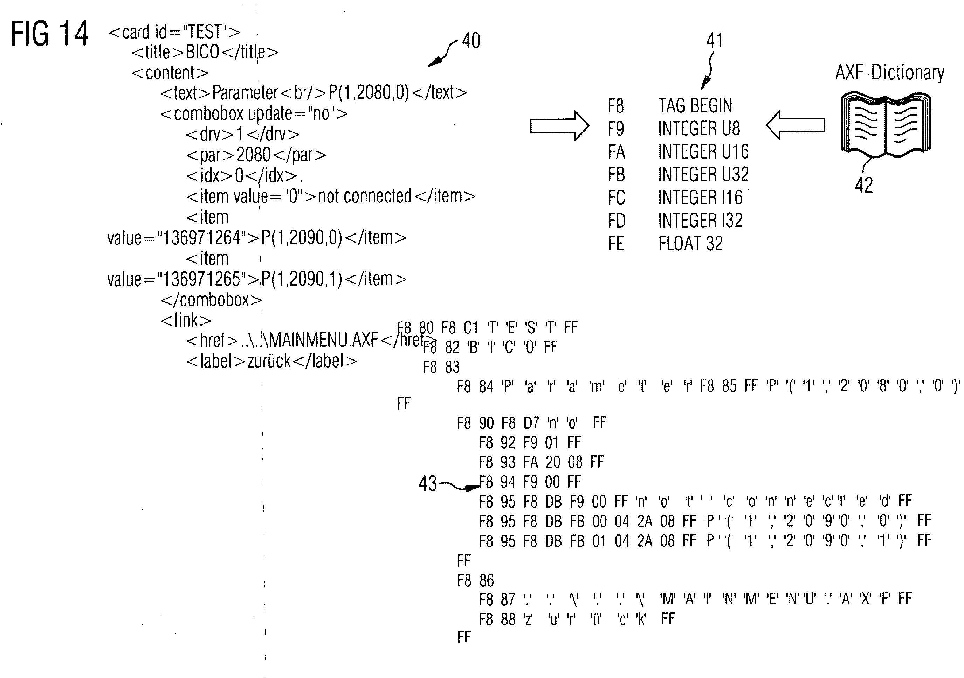

FIG 14 zeigt die prinzipielle Funktionsweise der Komprimierung eines beispielhaften XML-Skripts 40 in eine entsprechende AXF-Datei 43 gemäß der Erfindung. Das Skript 40 ist als Klartext gegeben. In datentechnischer Hinsicht ist dieses Skript nichts anderes als eine Zeichenkette mit einer bestimmten Länge. Mittels eines AXF-Dictionary 42 werden Anweisungen, wie z.B. "text", "combobox update" oder "item" durch ein entsprechendes hexadezimales Kürzel dargestellt. Desgleichen können gemäß einer Übersetzungstabelle 41 Zahlentypen, wie "INTEGER" oder "FLOAT", durch weitere Kürzel ersetzt werden. Das Resultat, d.h. die AXF-Datei 43, ist in hexadezimaler Darstellung gezeigt. Im Vergleich zum ursprünglichen Speicherbedarf des Skripts 40 im Klartext hat sich der Speicherbedarf erheblich verkleinert.

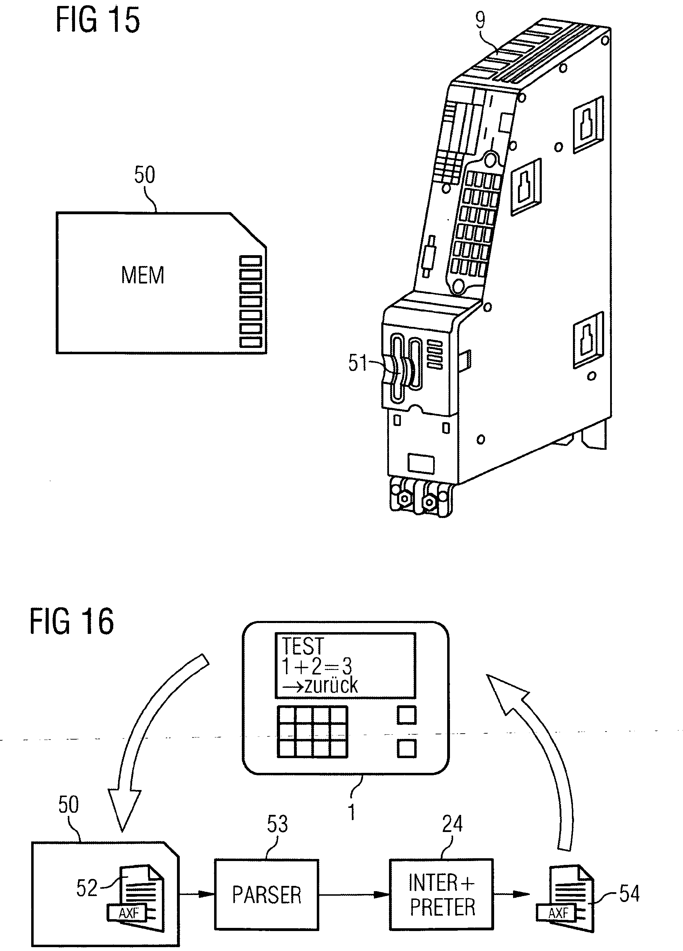

FIG 15 zeigt ein beispielhaftes Steuergerät 9 mit einem Lesegerät 51 zum Auslesen einer elektronischen Speicherkarte 50 als Datenspeichermedium für ein Interpreter-Programm 24 gemäß der Erfindung. Die elektronische Speicherkarte 50 kann dabei in einem dafür vorgesehenen Schlitz 51 an der Außenseite des Steuergeräts 9 eingesteckt werden.

FIG 16 zeigt einen beispielhaften Ablauf für das Starten, Abarbeiten eines Skripts 52 und eines daraus erzeugten Anzeigebausteins 54 gemäß dem erfindungsgemäßen Verfahren am Beispiel eines Testskripts.

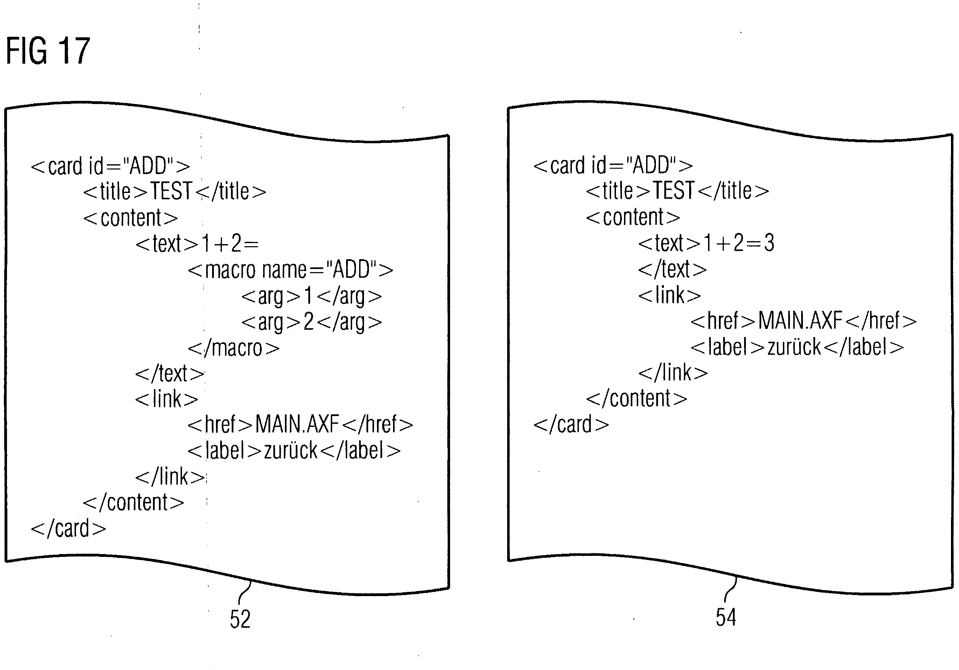

FIG 17 zeigt die zugehörigen Befehlszeilen des beispielhaften Skripts bzw. Anzeigebausteins in XML gemäß FIG 16.

Gemäß FIG 16 ist das Testskript 52 in komprimierter Form auf einer elektronischen Speicherkarte 50 abgelegt. Das Testskript 52 wird nun als neue "Anwendung" betrachtet, die ein Kunde oder Programmierer für das Steuergerät 9 erstellt hat. Nach Einschieben der elektronischen Speicherkarte 50 wird die darauf enthaltene komprimierte XML-Datei mittels eines Parser-Programms 53 auf dem Steuergerät 9 entpackt und anschlie ßend durch das Interpreter-Programm 24 bearbeitet.

FIG 17 zeigt die entpackten Befehlszeilen, wie sie dem Interpreter-Programm 24 nach dem Entpacken vorliegen. Es handelt sich bei dem Testskript um ein Additionsprogramm "ADD", welches die beiden Zahlen 1 und 2 addieren soll. Dieses Additionsprogramm wird nun durch das Interpreter-Programm 24 bearbeitet und ein entsprechender Anzeigebaustein in Skriptform erzeugt. Dies ist auf der rechten Seite der Figur 17 dargestellt. Der Anzeigebaustein enthält nun auch als Textangabe 1 + 2 = 3 das Ergebnis der mathematischen Operation. Dieser Anzeigebaustein wird anschließend komprimiert und als Ergebnisdatei 54 auf dem Steuergerät 9, wie z.B. in einer RAM-Disk, abgelegt. Durch einen Ladebefehl des Anzeigeprogramms 28 wird diese Ergebnisdatei 54 geladen und anschließend der Anzeigebaustein auf der graphischen Bedienoberfläche des Bedien-/Beobachtungsgeräts 1 dargestellt. Dies ist im Beispiel der FIG 16 dargestellt.

## Patentansprüche

1. Verfahren zum Bedienen und Beobachten eines Steuergeräts (9) mittels eines damit datentechnisch verbundenen Bedien-/Beobachtungsgeräts (1), wobei das Steuergerät (9) und das Bedien-/Beobachtungsgerät (1) eine prozessorgestützte Steuereinheit (10) zum Ausführen von Softwareprogrammen aufweist,
**dadurch gekennzeichnet,**
a) **dass** auf dem Steuergerät (9) ein Interpreter-Programm (24) ausgeführt wird, welches auf Skripte (31) mit Anzeigebausteinen (32) und Programmstrukturen (33) zugreifen kann,
b) **dass** die Programmstrukturen (33) auf Betriebsdaten der Firmware des Steuergeräts (9) zugreifen können, wobei die Betriebsdaten in Anzeigedaten eines vorgebbaren Anzeigeformats umgewandelt werden und umgekehrt,
c) **dass** die Skripte (31) abgearbeitet werden, wobei die Programmstrukturen (33) das zugehörige Ergebnis in Form von Anzeigebausteinen (32) mit ggf. den Anzeigedaten im vorgegebenen Anzeigeformat zusammenstellen und das Ergebnis dem Bedien-/Beobachtungsgerät (1) zur Verfügung stellen,
d) **dass** auf dem Bedien-/Beobachtungsgerät (1) ein Anzeigeprogramm (28) ausgeführt wird, um zumindest Anzeigebausteine (32) im vorgebbaren Anzeigeformat darzustellen, und
e) **dass** in den Anzeigebausteinen (32) Verweise auf zumindest ein Skript (31) auf dem Steuergerät (9) hinterlegt sind, welche in Zusammenhang mit einem Ereignis stehen, wobei dann das zugehörige Skript (31) bei Eintritt des Ereignisses vom Interpreter-Programm (24) gestartet und abgearbeitet wird.

2. Verfahren nach Anspruch 1, **dadurch gekennzeichnet, dass** das Ereignis eine Benutzeraktion ist, welche auf einer grafischen Bedienoberfläche (2) des Bedien-/Beobachtungsgeräts (1) auswählbar ist.

3. Verfahren nach Anspruch 1 oder 2, **dadurch gekennzeichnet, dass** das Ereignis ein interner Melde- oder Alarmzustand des Steuergeräts (9) ist.

4. Verfahren nach Anspruch 3, **dadurch gekennzeichnet, dass** der interne Melde- oder Alarmzustand (9) vom Steuergerät (9) zyklisch ausgegeben wird.

5. Verfahren nach einem der vorigen Ansprüche, **dadurch gekennzeichnet, dass** die Anzeigebausteine (32) Textfelder, Bitmaps, Editierfelder umfassen.

6. Verfahren nach einem der vorigen Ansprüche, **dadurch gekennzeichnet, dass** die Programmstrukturen (33) mathematische und logische Funktionen sowie Programmverzweigungen und Schleifen umfassen.

7. Verfahren nach einem der vorigen Ansprüche, **dadurch gekennzeichnet, dass** mehrere Anzeigebausteine (32) zu Anzeigeseiten kombiniert werden.

8. Verfahren nach einem der vorigen Ansprüche, **dadurch gekennzeichnet, dass** das Interpreter-Programm Daten in Form von Variablen und Arrays verwaltet, die in den Skripten (31) definiert sind.

9. Verfahren nach einem der vorigen Ansprüche, **dadurch gekennzeichnet, dass** die Skripte (31), die Anzeigebausteine (32) und die Programmstrukturen (33) als Dateien in einer Bibliothek (30) vorliegen.

10. Verfahren nach Anspruch 9, **dadurch gekennzeichnet, dass** die Dateien in einem komprimierten Dateiformat vorliegen.

11. Verfahren nach einem der obigen Ansprüche, **dadurch gekennzeichnet, dass** die Anzeigebausteine (32) bzw.
die aus Anzeigebausteinen (32) kombinierten Anzeigeseiten in einer Ergebnisdatei (25) gespeichert werden.

12. Verfahren nach Anspruch 11, **dadurch gekennzeichnet, dass** die Ergebnisdatei (25) nach Laden durch das Anzeigeprogramm (28) wieder dekomprimiert wird.

13. Verfahren nach einem der vorigen Ansprüche, **dadurch gekennzeichnet, dass** das Anzeigeprogramm (28) zyklisch das Vorhandensein von aktualisierten Anzeigebausteinen (32) bzw. von aus Anzeigebausteinen (32) kombinierten aktualisierten Anzeigeseiten prüft und diese bei Vorliegen lädt und darstellt.

14. Verfahren nach einem der vorigen Ansprüche, **dadurch gekennzeichnet, dass** die Skripte (31), die Anzeigebausteine (32) und Programmstrukturen (33) in der Notation der Auszeichnungssprache XML (Extentable Markup Language) strukturiert sind.

15. Verfahren nach einem der Ansprüche 1 bis 13, **dadurch gekennzeichnet, dass** zur Abarbeitung der Skripte (31) die Skriptsprache Tcl mit Anzeigebausteinen (32) auf Basis von Tk verwendet werden.

16. Verfahren nach einem der vorigen Ansprüche, **dadurch gekennzeichnet, dass** das Interpreter-Programm (24) durch die Steuereinheit (10) in einem Hintergrund-Prozess ausgeführt wird.

17. Verfahren nach einem der vorigen Ansprüche, **dadurch gekennzeichnet, dass** die Steuereinheit (10) Softwareprogramme eines Realtime Betriebssystems ausführt.

18. Verfahren nach einem der vorigen Ansprüche, **dadurch gekennzeichnet, dass** das Bedien-/Beobachtungsgerät (1) und das Steuergerät (9) über eine drahtlose Datenübertragungsstrecke kommunizieren.

19. Verfahren nach einem der vorigen Ansprüche, **dadurch gekennzeichnet, dass** das Verfahren bei einer Inbetriebnahme des Steuergeräts (9) angewandt wird.

20. Verfahren nach einem der Ansprüche 1 bis 18, **dadurch gekennzeichnet, dass** das Verfahren zum Bedienen und zum Beobachten von Automatisierungs- und Fertigungsprozessen angewandt wird.

21. Datenspeichermedium mit einem in maschinenlesbarer Form gespeicherten Programm (28) zur Durchführung des Verfahrens nach einem der Ansprüche 1 bis 18 auf einem Gerät, wobei das Gerät insbesondere ein Bedien-/Beobachtungsgeräts (1) ist, wobei das Programm insbesondere ein Anzeigeprogramm (28) ist.

22. Datenspeichermedium nach Anspruch 21, wobei das Programm ein Interpreter-Programm (24) ist, mit einer Bibliothek (30) aus Skripten (31), Anzeigebausteinen (32) und Programmstrukturen (33) zur Durchführung des Verfahrens nach einem der Ansprüche 1 bis 18, wobei das Gerät ein Steuergerät (9) ist.

23. Bedien-/Beobachtungsgerät mit einer grafischen Bedienoberfläche (2), mit Eingabemitteln (3-7) für einen Benutzer, mit einer Datenschnittstelle zur datentechnischen Verbindung des Bedien-/Beobachtungsgeräts mit einem Steuergerät (9) sowie mit einer prozessorgestützten Steuereinheit (10) zum Ausführen von Softwareprogrammen, **gekennzeichnet durch** die Steuereinheit (10) zum Ausführen eines Anzeigeprogramms (28) zur Durchführung des Verfahrens nach einem der Ansprüche 1 bis 18
a) zum Laden und Darstellen zumindest von Anzeigebausteinen (29) in einem vorgebbaren Anzeigeformat auf der grafischen Bedienoberfläche (2) und
b) zur Ausgabe eines Verweises auf zumindest ein Skript (31) auf dem Steuergerät (9), wobei der Verweis in den Anzeigebausteinen (32) hinterlegt ist und **durch** eine Benutzeraktion auf der grafischen Bedienoberfläche (2) auswählbar ist.

24. Bedien-/Beobachtungsgerät nach Anspruch 23, **dadurch gekennzeichnet, dass** die grafische Bedienoberfläche (2) ein Touch-Screen ist.

25. Bedien-/Beobachtungsgerät nach Anspruch 23 oder 24, **dadurch gekennzeichnet, dass** das Bedien-/Beobachtungsgerät (1) als tragbare mobile Einheit ausgeführt ist.

26. Bedien-/Beobachtungsgerät nach einem der Ansprüche 23 bis 25, **dadurch gekennzeichnet, dass** das Bedien-/Beobachtungsgerät (1) ein Operator Panel für den Einsatz in der Automatisierungs- und Fertigungstechnik ist.

27. Bedien-/Beobachtungsgerät nach einem der Ansprüche 23 bis 26, **dadurch gekennzeichnet, dass** das Bedien-/Beobachtungsgerät (1) ein Lesegerät für ein Datenspeichermedium nach Anspruch 21 oder 22 aufweist, wie z.B. ein Disketten-, CD-, DVD-Laufwerk oder ein Lesegerät zum Auslesen von elektronischen Speicherkarten (50).

28. Bedien-/Beobachtungsgerät nach einem der Ansprüche 23 bis 27, **gekennzeichnet durch** eine drahtlose Datenschnittstelle zur Verbindung mit dem Steuergerät (9) auf Basis eines WLAN-, IRDA-, Bluetooth-Standards.

29. Steuergerät mit einer prozessorgestützten Steuereinheit (10) zum Ausführen von Softwareprogrammen und mit einer Datenschnittstelle zur datentechnischen Verbindung mit einem Bedien-/Beobachtungsgerät (1), **gekennzeichnet durch** die Steuereinheit (10) zum Ausführen eines Interpreter-Programms (24) zur Durchführung des Verfahrens nach einem der Ansprüche 1 bis 18
a) zum Starten und Abarbeiten eines Skripts (31) mittels eines von der Datenschnittstelle empfangenen zugehörigen Verweises auf das Skript (31) im Steuergerät (9),
b) zum Zusammenstellen des zugehörigen Ergebnisses der Abarbeitung mittels der Programmstrukturen (33) des gestarteten Skripts (31) in Form von Anzeigebausteinen (32) mit ggf. den Anzeigedaten im vorgegebenen Anzeigeformat und
c) zum Speichern der Anzeigebausteine (32) auf dem Steuergerät (9).

30. Steuergerät nach Anspruch 29, **gekennzeichnet durch einen** Mikrocontroller als Steuereinheit (10).

31. Steuergerät nach Anspruch 29 oder 30, **dadurch gekennzeichnet, dass** die Steuereinheit (10) ein im Steuergerät (9) eingebettetes System ist.

32. Steuergerät nach einem der Ansprüche 29 bis 31, **dadurch gekennzeichnet, dass** das Steuergerät (9) ein Automatisierungsgerät ist.

33. Steuergerät nach einem der Ansprüche 29 bis 32, **dadurch gekennzeichnet, dass** das Steuergerät (9) ein Lesegerät (51) zum Auslesen von elektronischen Speicherkarten (50) aufweist.

34. Steuergerät nach einem der Ansprüche 29 bis 33, **gekennzeichnet durch** eine drahtlose Datenschnittstelle zur Verbindung mit dem Bedien-/Beobachtungsgerät (1) auf Basis eines WLAN-, IRDA- oder Bluetooth-Standards.

35. Werkzeugmaschine mit einem Steuergerät (9) nach einem der Ansprüche 29 bis 34.

## Claims

1. Method for operating and monitoring a control device (9) by means of an operating/monitoring device (1) which has a data-oriented link to it, with the control device (9) and the operating/monitoring device (1) having a processor-supported control unit (10) for executing software programs,
**characterised in that**
a) an interpreter program (24) is executed on the control device (9), and can access scripts (31) with display modules (32) and program structures (33),
b) the program structures (33) can access operating data for the firmware on the control device (9), with the items of operating data being converted into display data in a prescribable display format, and vice versa,
c) the scripts (31) are processed, in doing which the program structures (33) compile the associated result in the form of display modules (32) with any necessary display data in the prescribed display format, and make the result available to the operating/monitoring device (1),
d) a display program (28) is executed on the operating/monitoring device (1) in order to display at least display modules (32) in the prescribable display format, and
e) stored in the display modules (32) are references to at least one script (31) on the control device (9), these being associated with an event, by which means the associated script (31) is started and processed by the interpreter program (24) when the event occurs.

2. Method according to claim 1, **characterised in that** the event is a user action, which can be selected on a graphical user interface (2) of the operating/monitoring device (1).

3. Method according to claim 1 or 2, **characterised in that** the event is an internal report or alarm state of the control device (9).

4. Method according to claim 3, **characterised in that** the internal report or alarm state (9) is output cyclically by the control device (9).

5. Method according to one of the preceding claims, **characterised in that** the display modules (32) incorporate text fields, bit maps, edit fields.

6. Method according to one of the preceding claims, **characterised in that** the program structures (33) incorporate mathematical and logical functions together with program branches and loops.

7. Method according to one of the preceding claims, **characterised in that** several display modules (32) are combined into display pages.

8. Method according to one of the preceding claims, **characterised in that** the interpreter program manages data in the form of variables and arrays which are defined in the scripts (31).

9. Method according to one of the preceding claims, **characterised in that** the scripts (31), the display modules (32) and the program structures (33) are present in a library (30) as files.

10. Method according to claim 9, **characterised in that** the files are present in a compressed file format.

11. Method according to one of the preceding claims, **characterised in that** the display modules (32) or the display pages made by combining display modules (32), as applicable, are stored in a results file (25).

12. Method according to claim 11, **characterised in that** the results file (25) is decompressed again after it has been loaded by the display program (28).

13. Method according to one of the preceding claims, **characterised in that** the display program (28) checks cyclically for the presence of updated display modules (32) or updated display pages from combinations of display modules (32), as applicable, and if they are present loads and displays them.

14. Method according to one of the preceding claims, **characterised in that** the scripts (31), the display modules (32) and program structures (33) are structured in the notation of the XML markup language (Extensible Markup Language).

15. Method according to one of claims 1 to 13, **characterised in that** for the purpose of processing the scripts (31), use is made of the script language Tcl with display modules (32) based on Tk.

16. Method according to one of the preceding claims, **characterised in that** the interpreter program (24) is executed by the control unit (10) in a background process.

17. Method according to one of the preceding claims, **characterised in that** the control unit (10) executes software programs of a real time operating system.

18. Method according to one of the preceding claims, **characterised in that** the operating/monitoring device (1) and the control device (9) communicate via a wireless data transmission link.

19. Method according to one of the preceding claims, **characterised in that** the method is applied during the commissioning of the control device (9).

20. Method according to one of claims 1 to 18, **characterised in that** the method is applied for operating and monitoring automation and manufacturing processes.

21. Data storage medium with a display program (28), stored in machine-readable form, for carrying out the method according to one of claims 1 to 18 on a device, with the device especially being an operating/monitoring device (1), with the program especially being a display program (28).

22. Data storage medium according to claim 21, with the program being an interpreter program (24), with a library (30) of scripts (31), display modules (32) and program structures (33) for carrying out the method according to one of claims 1 to 18, with device being a control device (9).

23. Operating/monitoring device with a graphical user interface (2), with facilities (3-7) for user inputs, with a data interface for a data-oriented link between the operating/monitoring device and a control device (9) and with a processor-supported control unit (10) for executing software programs, **characterised by** the control unit (10) for executing a display program (28) for carrying out Method according to one of claims 1 to 18
a) for loading and displaying on the graphical user interface (2) at least display modules (29), in a prescribable display format, and
b) for outputting a reference to at least one script (31) on the control device (9), with the reference being held in the display modules (32) and being able to be selected by a user action on the graphical user interface (2).

24. Operating/monitoring device according to claim 23, **characterised in that** the graphical user interface (2) is a touch screen.

25. Operating/monitoring device according to claim 23 or 24, **characterised in that** the operating/monitoring device (1) takes the form of a portable mobile unit.

26. Operating/monitoring device according to one of claims 23 to 25, **characterised in that** the operating/monitoring device (1) is an operator panel for use in automation and manufacturing technology.

27. Operating/monitoring device according to one of claims 23 to 26, **characterised in that** the operating/monitoring device (1) has a reader for a data storage medium according to claim 21 or 22, such as for example a diskette, CD, DVD drive or a reader for reading out electronic memory cards (50).

28. Operating/monitoring device according to one of claims 23 to 27, **characterised by** a wireless data interface based on a WLAN, IRDA or Bluetooth standard for connecting it to the control device (9).

29. Control device with a processor-supported control unit (10) for executing software programs and with a data interface for a data-oriented link to an operating/monitoring device (1), **characterised by** the control unit (10) for executing an interpreter program (24) for carrying out a method according to one of claims 1 to 18
a) for starting and processing a script (31) by means of an associated reference to the script (31) in the control device (9), received from the data interface,
b) for compiling the associated result of the processing, using the program structures (33) for the script which has been started (31), in the form of display modules (32), if necessary with the display data in the prescribed display format, and
c) for storing the display modules (32) on the control device (9).

30. Control device according to claim 29, **characterised by** a microcontroller as the control unit (10).

31. Control device according to claim 29 or 30, **characterised in that** the control unit (10) is a system embedded in the control device (9).

32. Control device according to one of claims 29 to 31, **characterised in that** the control device (9) is a programmable controller.

33. Control device according to one of claims 29 to 32, **characterised in that** the control device (9) has a reader (51) for reading out electronic memory cards (50).

34. Control device according to one of claims 29 to 33, **characterised by** a wireless data interface based on a WLAN, IRDA or Bluetooth standard, for connecting it to the operating/monitoring device (1).

35. Machine tool with a control device (9) according to one of claims 29 to 34.

## Revendications

1. Procédé de commande et de contrôle d'un appareil ( 9 ) de commande au moyen d'un appareil de commande/contrôle qui y est lié en technique de données, l'appareil ( 9 ) de commande et l'appareil ( 1 ) de commande/contrôle comportant une unité ( 10 ) de commande assistée par processeur pour l'exécution de programmes de logiciel, **caractérisé**
a) **en ce que** l'on exécute sur l'appareil ( 9 ) de commande un programme ( 24 ) d'interpréteur qui peut accéder à des manuscrits ( 31 ) par des modules ( 32 ) d'affichage et des structures ( 33 ) de programme,
b) **en ce que** les structures ( 33 ) de programme peuvent accéder à des données de service du microprogiciel de l'appareil ( 9 ) de commande, les données de service étant transformées en données d'affichage d'un format d'affichage pouvant être prescrit et inversement,
c) **en ce que** l'on élabore les manuscrits ( 31 ), dans lequel les structures ( 33 ) de programme, le résultat associé sous la forme de modules ( 32 ) d'affichage sont rassemblés avec le cas échéant les données d'affichage dans le format d'affichage prescrit, et le résultat étant mis à la disposition de l'appareil ( 1 ) de commande/contrôle,
d) **en ce qu'**on exécute un programme ( 28 ) d'affichage sur l'appareil ( 1 ) de commande/contrôle pour représenter au moins des modules ( 32 ) d'affichage dans le format d'affichage pouvant être prescrit, et
e) **en ce que** l'on mémorise dans les modules ( 32 ) d'affichage des renvois à au moins un manuscrit ( 31 ) sur l'appareil
( 9 ) de commande, qui sont en relation avec un événement, le manuscrit ( 31 ) associé étant, à l'arrivée de l'événement, lancé et élaboré par le programme ( 24 ) d'interpréteur.

2. Procédé suivant la revendication 1, **caractérisé en ce que** l'événement est une action d'un utilisateur, qui peut être choisie sur une surface ( 2 ) de commande graphique de l'appareil ( 1 ) de commande/contrôle.

3. Procédé suivant la revendication 1 ou 2, **caractérisé en ce que** l'événement est un état interne d'indication ou d'alerte de l'appareil ( 9 ) de commande.

4. Procédé suivant la revendication 3, **caractérisé en ce que** l'état ( 9 ) interne d'indication ou d'alerte est émis cycliquement par l'appareil ( 9 ) de commande.

5. Procédé suivant l'une des revendications précédentes, **caractérisé en ce que** les modules ( 32 ) d'affichage comprennent des champs de texte, des bitmaps, des champs d'édition.

6. Procédé suivant l'une des revendications précédentes, **caractérisé en ce que** les structures ( 33 ) de programme comprennent des fonctions mathématiques et logiques, ainsi que des bifurcations de programme et des boucles.

7. Procédé suivant l'une des revendications précédentes, **caractérisé en ce que** l'on combine plusieurs modules ( 32 ) d'affichage en des pages d'affichage.

8. Procédé suivant l'une des revendications précédentes, **caractérisé en ce que** le programme d'interpréteur gère des données sous la forme de variables et de matrices, qui sont définies dans les manuscrits ( 32 ).

9. Procédé suivant l'une des revendications précédentes, **caractérisé en ce que** les manuscrits ( 31 ), les modules ( 32 ) d'affichage et les structures ( 33 ) de programme se présentent sous la forme de fichiers d'une base ( 30 ).

10. Procédé suivant la revendication 9, **caractérisé en ce que** les fichiers se présentent en un format de fichier comprimés.

11. Procédé suivant l'une des revendications précédentes, **caractérisé en ce que** les modules ( 32 ) d'affichage ou les pages d'affichage, combinés à partir des modules ( 32 ) d'affichage, sont mémorisés dans un fichier ( 25 ) de résultat.

12. Procédé suivant la revendication 11, **caractérisé en ce que** le fichier ( 25 ) de résultat est redécomprimé après chargement par le programme ( 28 ) d'affichage.

13. Procédé suivant l'une des revendications précédentes, **caractérisé en ce que** le programme ( 28 ) d'affichage contrôle cycliquement la présence de modules ( 32 ) d'affichage mis à jour ou de pages d'affichage mises à jour, combinés à partir des modules ( 32 ) d'affichage et s'ils sont présents, les chargent et les représentent.

14. Procédé suivant l'une des revendications précédentes, **caractérisé en ce que** les manuscrits ( 31 ), les modules ( 32 ) d'affichage et les structures ( 33 ) de programme sont structurés dans la notation du langage de balisage XML ( Extentable Markup Language ).

15. Procédé suivant l'une des revendications 1 à 13, **caractérisé en ce que** pour l'élaboration des manuscrits ( 31 ) on utilise le langage Tc1 de manuscrit avec des modules ( 32 ) d'affichage sur la base de Tk.

16. Procédé suivant l'une des revendications précédentes, **caractérisé en ce que** l'on réalise le programme ( 24 ) d'interpréteur par l'unité ( 10 ) de commande dans un processus d'arrière-plan.

17. Procédé suivant l'une des revendications précédentes, **caractérisé en ce que** l'unité ( 10 ) de commande exécute des programmes de logiciel d'un système de service en temps réel.

18. Procédé suivant l'une des revendications précédentes, **caractérisé en ce que** l'appareil ( 1 ) de commande/contrôle et l'appareil ( 9 ) de commande communiquent par une section de transmission de données sans fil.

19. Procédé suivant l'une des revendications précédentes, **caractérisé en ce qu'**on applique le procédé à une mise en fonctionnement de l'appareil ( 9 ) de commande.

20. Procédé suivant l'une des revendications 1 à 18, **caractérisé en ce que** l'on applique le procédé à la commande et au contrôle d'opérations d'automatisation et de fabrication.

21. Support de mémoire de données ayant un programme ( 28 ) mémorisé d'une manière exploitable par une machine pour la mise en oeuvre du procédé suivant l'une des revendications 1 à 18 sur un appareil, l'appareil étant notamment un appareil ( 1 ) de commande/contrôle, le programme étant notamment un programme ( 28 ) d'affichage.

22. Support de mémoire de données suivant la revendication 21, dans lequel le programme est un programme ( 24 ) d'interpréteur, comprenant une base ( 30 ) de manuscrits ( 31 ), des modules ( 32 ) d'affichage et des structures ( 33 ) de programme pour la mise en oeuvre du procédé suivant l'une des revendications 1 à 18, l'appareil étant un appareil ( 9 ) de commande.

23. Appareil de commande/contrôle comprenant une surface ( 2 ) de commande graphique, ayant des moyens ( 3 à 7 ) d'entrée pour un utilisateur, une interface de données pour la liaison en technique de données de l'appareil de commande/contrôle avec un appareil ( 9 ) de commande, ainsi qu'une unité ( 10 ) de commande assistée par processeur pour la réalisation de programme de logiciel, **caractérisé par** l'unité ( 10 ) de commande pour l'exécution d'un programme ( 28 ) d'affichage pour effectuer le procédé suivant l'une des revendications 1 à 18
a) pour le chargement et la représentation au moins de modules ( 29 ) d'affichage dans un format d'affichage pouvant être prescrit sur la surface ( 2 ) de service graphique et
b) pour l'émission d'un renvoi à au moins un manuscrit ( 31 ) sur l'appareil ( 9 ) de commande, le renvoi étant mémorisé dans les modules ( 32 ) d'affichage et pouvant être choisi par une action de l'utilisateur sur la surface ( 2 ) de service graphique.

24. Appareil de commande/contrôle suivant la revendication 23, **caractérisé en ce que** la surface ( 2 ) de service graphique est un écran tactile.

25. Appareil de commande/contrôle suivant la revendication 23 ou 24, **caractérisé en ce que** l'appareil ( 1 ) de commande/contrôle est réalisé sous la forme d'une unité mobile portative.

26. Appareil de commande/contrôle suivant l'une des revendications 23 à 25, **caractérisé en ce que** l'appareil de commande/contrôle est un panel opérateur pour l'utilisation dans la technique d'automatisation et de fabrication.

27. Appareil de commande/contrôle suivant l'une des revendications 23 à 26, **caractérisé en ce que** l'appareil ( 1 ) de commande/contrôle comporte un appareil de lecture d'un support de mémoire de données suivant la revendication 21 ou 22, comme par exemple un lecteur de disquettes, de CD, de DVD ou un appareil de lecture pour lire des cartes ( 50 ) électroniques de mémoire.

28. Appareil de commande/contrôle suivant l'une des revendications 23 à 27, **caractérisé par** une interface de données sans fil pour la liaison à l'appareil ( 9 ) de commande sur la base d'une norme WLAN, IRDA, bluetooth.

29. Appareil de commande comprenant une unité ( 10 ) de commande assistée par processeur pour l'exécution de programmes de logiciel et une interface de données pour la liaison en technique de données avec un appareil ( 1 ) de commande/contrôle, **caractérisé par** l'unité ( 10 ) de commande pour l'exécution d'un programme ( 24 ) d'interpréteur pour la mise en oeuvre du procédé suivant l'une des revendications 1 à 18
a) pour commencer et élaborer un manuscrit ( 31 ) au moyen d'un renvoi associé, reçu par l'interface de données, au manuscrit ( 31 ) dans l'appareil ( 9 ) de commande,
b) pour la réunion du résultat associé de l'élaboration au moyen des structures ( 33 ) de programme du manuscrit ( 31 ) commencé sous la forme de modules ( 32 ) d'affichage avec, le cas échéant, les données d'affichage dans le format d'affichage prescrit et
c) pour la mémorisation des modules ( 32 ) d'affichage sur l'appareil ( 9 ) de commande.

30. Appareil de commande suivant la revendication 29, **caractérisé par** un microcontrôleur comme unité ( 10 ) de commande.

31. Appareil de commande suivant la revendication 29 ou 30, **caractérisé en ce que** l'unité ( 30 ) de commande est un système incorporé dans l'appareil ( 9 ) de commande.

32. Appareil de commande suivant l'une des revendications 29 à 31, **caractérisé en ce que** l'appareil ( 9 ) de commande est un appareil d'automatisation.

33. Appareil de commande suivant l'une des revendications 29 à 32, **caractérisé en ce que** l'appareil ( 9 ) de commande comporte un appareil ( 51 ) de lecture pour la lecture de cartes ( 50 ) électroniques de mémoire.

34. Appareil de commande suivant l'une des revendications 29 à 33, **caractérisé par** une interface de données sans fil pour la liaison avec l'appareil ( 1 ) de commande/contrôle sur la base d'un standard WLAN, IRDA ou bluetooth.

35. Machine-outil ayant un appareil ( 9 ) de commande suivant l'une des revendications 29 à 34.
